# EUROPEAN PATENT SPECIFICATION

(11) **EP 1 944 678 B1**
(45) Date of publication and mention of the grant of the patent: **18.07.2018**
(21) Application number: 07000467.6
(22) Date of filing: 10.01.2007
(51) Int. Cl.: G06F 3/01

(54) **Calibration of head tracking systems**
Kalibrierung von Kopf-Trackingsystemen
Étalonnage de systèmes de centrage des têtes

(43) Date of publication of application: 16.07.2008
(73) Proprietor: Harman Becker Automotive Systems GmbH, 76307 Karlsbad (DE)
(72) Inventor: Hess, Wolfgang, 76307 Karlsbad (DE); Münch, Tobias, 75334 Straubenhardt (DE); Nitzpon, Hans-Jürgen, Dr., 76275 Ettlingen (DE)
(74) Representative: Grünecker Patent- und Rechtsanwälte PartG mbB

(56) References cited:
- WO-A-00/52563
- WO-A-01/07995
- US-A- 4 209 255
- US-A- 4 700 301
- US-B1- 6 618 683

## Description

### Field of Invention

The present invention relates to tracking devices and, in particular, to head tracking devices. More particularly the invention relates to head tracking devices making use of inertial tracking of head movements and the calibration of inertial tracking devices.

### Background of the invention

Tracking devices are used to capture human body motion and to allow a virtual reality system to monitor the position (Cartesian coordinates) and orientation (rotational angles, i.e. the roll, pitch and yaw) of selected body parts. Information about location and orientation can be supplied to a computer to immerse a person in a virtual environment thereby enabling the person to interact with the virtual environment in a way that is perceived to be natural. Also, in the context of virtual acoustics precise measurement of head motions is of importance. Recent sound systems offering virtual acoustics apply head-tracking to ensure optimal localization and sound color reproduction, even when the listeners are allowed to turn around and/or move their heads.

The precision with which actions can be executed in the virtual world or settings of virtual acoustics can generate the desired acoustical effects depend on the resolution and accuracy of a tracking device used. Whereas the resolution is fixed for a given device, the accuracy usually decreases with the distance of the sensor from the source. The range of a tracking device is the maximum distance between sensor and source up to which the position and orientation can be measured with a specified accuracy. Interference, or sensitivity to environmental factors, can limit the effectiveness of tracking devices.

Movement of an object is always relative to a point of reference. In order to measure such movement a sensor attached to the object (e.g. a body part) can sense (measure the distance to, or orientation or position of) a source attached to the reference or, the sensor, attached to the reference, senses a source that is attached to the object. The source can be either natural (e.g. the earth's gravitational field) or artificial (light emitted by an LED). The human body consists of many moving parts, so that, taking one body part as a reference for another, the source and sensor can both be attached to the body. Of particular importance for many applications are head trackers.

WO 01/07995 A discloses a method for calibrating an inertial head tracking device carried by a user and measuring at least one rotational angle of the moving head of the user comprising: providing a marking at a fixed position spaced apart from the inertial head tracking device; receiving some collimated electromagnetic beam from the marking by the inertial head tracking device; resetting the at least one measured rotational angle to a predetermined value when the electromagnetic beam is received by the inertial head tracking device in response to the reception of the electromagnetic beam. US-B1- 6 618 683 discloses a navigation device includes accelerometers for measuring movement. Given a beginning location and orientation, the device determines current location and orientation based on the information from the accelerometers.

WO 00/52563 A discloses a head tracker system for determining a user's head orientation relative to a datum comprising: a head mounting for attachment to the user's head; an optical sensor which in use is located in fixed relation with a known fixed point relative to the head mounting and a plurality of distinguishable markings each of which when in use is located in fixed relation with a respective known point which is fixed relative to the datum.

In US-A-4 209 255 it is described an aiming point locating system that has a single LED mounted on the helmet of a pilot in an aircraft and can be used to designate a point on a cockpit display, or the like, without touching the display.

In US-A-4 700 301 it is described a method of automatically steering a motor vehicle on a preprogrammed course by continuously measuring angles between reference points and using a microprocessor to calculate vehicle position and direction of motion.

Current tracking devices employ, e.g., electromagnetic, optical or mechanical technologies. Optical tracking devices for tracking head positions comprise active light sources attached to a head mounted device worn by a user and cameras installed in the physical environment of the user or active light sources installed in the physical environment and cameras attached to the head mounted device. Projections of the light sources on the cameras contain the information necessary to uniquely identify the position and orientation of the head of the user. Whereas optical tracking devices allow for high update rates and short time lags (reaction time), obstacles between the light sources and the cameras and ambient radiation can severely deteriorate the performance.

Electromagnetic head tracking devices operate by measuring the strength of magnetic fields generated by sending current through three wire coils that are oriented perpendicular to one another. These three coils are embedded in a small unit that is attached to a head mounted device, e.g., a head mounted display. By sequentially activating each of the wires and measuring the magnetic fields generated on each of three other perpendicular wire coils, it is possible to determine the position and orientation of the sending unit. Electromagnetic tracking devices, however, may experience interference operating in the vicinity of computer display devices or other devices that produce magnetic fields as well as metal objects.

Mechanical tracking devices make use of the inertia of moved masses. Accelerometers and gyroscopes are used to measure the translational and rotational movement of a tracked object. Gyroscopic trackers operate on the basis of the conservation of angular momentum and use miniature gyroscopes to measure orientation changes. A gyroscope basically consists of a rapidly spinning wheel that resists any change in orientation suspended in a housing. This resistance can be measured and converted into yaw, pitch, and roll values. Such inertial trackers are truly sourceless and unaffected by almost any environmental interference. Moreover, they are comparatively cheap, fast and accurate. Gyroscopic trackers, however, suffer from reading drift between actual and reported values that is accumulated over time, typically around 3° per minute, even up to 10° per minute. The drift arises from integrating over time a noisy and/or biased signal.

In the art drift compensators have been proposed that comprise inclinometers and a compass or accelerometers for registering tilt and optical or RF sensors for registering heading. However, the additional employment of compensators not only increases the production costs but also still does not result in a sufficient reduction of drift.

Thus, there is a need for reducing the drift in inertial head tracking devices.

### Description of the Invention

The above-mentioned drawbacks in the art of inertial head tracking are eliminated or at least significantly alleviated by the method according to claim 1. The inertial head tracking device may be configured to measure translational and rotational movements of the head of the user (6 degrees of freedom device) or it may be configured to measure rotational angles only. The rotational angles are the roll, pitch and yaw. Herein, by yaw the angle of the horizontal turning of the head, i.e. the azimuth angle, is denoted. The pitch refers to the angle of the nodding of the head and the movement of the head towards a shoulder is measured by the roll. The yaw or azimuthal angle (herein, both expressions are used synonymously) is probably the most important of theses angles in the context of virtual acoustics and virtual reality applications.

By the claimed resetting of a measured rotational angle in response to the detection of the emitted beam by a sensor arranged at a selected position, e.g., ahead of a user, the inertial head tracking device is automatically calibrated. Thus, accumulation of drift between measured rotational angles and actual ones is significantly reduced as compared to the art. In fact, the drift is set to zero every time the emitted beam is detected. When the electromagnetic beam is detected at the fixed position spaced apart from the inertial head tracking device a feedback signal is sent to the
inertial head tracking device and the measured at least one rotational angle
is reset to the predetermined value when the feedback signal is received by
the inertial head tracking device in response to the feedback signal. The feedback signal is in the form of the (partly) reflected beam emitted by the head tracking. Thus, according to one example, when the electromagnetic beam is detected at the fixed position spaced apart from the inertial head tracking device the detected electromagnetic beam is at least partly reflected to the inertial head tracking device and the at least one measured rotational angle is reset to the predetermined value when the at least partly reflected electromagnetic beam is received by the inertial head tracking device and in response to the partly reflected electromagnetic beam.

The above two possibilities can readily be implemented with low costs in order to achieve the automatic calibration in response to the detection of the emitted beam.

The beam may be detected by a sensor that is attached at or in a display device. Thus, the method according to this embodiment is useful in the context of computer games, manipulation of items displayed on a screen, movie entertainment, etc. Whenever the user looks directly to the display device, i.e. in a straight line perpendicular to the screen, the sensor can detect the emitted beam and automatic calibration of the head tracking device carried (worn) by the user will be performed.

The beam is deflected in one direction into some angular range to ensure detection of the beam when it is emitted in the direction of a sensor used for the detection of the beam. In principle, the beam can be scatted in the predetermined angular range or it can be deflected by a moving mirror actuated by a step motor such that the beam scans the entire angular range. The beam is preferably deflected continuously (not in discrete intervals) over the entire predetermined angular range. In particular, the beam may be deflected by a fan-shaped deflector that is efficient in broadening a collimated beam.

As mentioned above for many applications measurement of the azimuthal angle of some head movement is of particular importance. According to an example of the inventive method the at least one measured rotational angle is the azimuthal angle and the emitted electromagnetic beam is deflected vertically. Automatic calibration of the azimuth measurement will, thus, be achieved, e.g., when a user looks straight in the direction of a sensor that is installed outside the head tracking device, e.g. at a display device.

The emitted beam can be, in principle, an infrared, or ultraviolet beam. An IR beam might preferably be generated by means of a light emitting diode (LED). The beam according to one embodiment of the herein disclosed method may be encoded. For example, an encoded IR beam is generated by means of a turning wheel breaking the beam with a predetermined frequency in intervals. Other kinds of modulation as known in the art are possible. In the case of an encoded beam the sensor used for detection of the beam will only response when detecting the encoded beam and will not erroneously trigger calibration when detecting some other not encoded electromagnetic radiation, e.g., the sun light.

The above-mentioned problem is also solved by an inertial head tracking device calibration system according to claim 7. According to an example, the inertial head tracking device calibration system further comprises an encoder configured to encode the electromagnetic beam. The emitter can be an infrared light emitter, e.g. an infrared LED, or an ultraviolet light emitter. The feedback signal is a part of the reflected beam, i.e. the sensor means are configured to reflect at least partly the detected electromagnetic beam to the inertial head tracking device as the feedback signal. According to the invention, the sensor is simply a mirror reflecting the beam emitted by the emitter of the inertial tracking device.

According to one example of the inertial head tracking device calibration system the at least one rotational angle is the azimuthal angle and the deflector is configured to deflect the emitted electromagnetic beam vertically.

The present invention also provides a headphone, according to claim 11. Moreover, it is provided a headphone tracking system according to claim 12. Furthermore, the present invention provides a headphone - display device system, according to claim 13. The display device can, e.g., be a computer monitor. Computer games and virtual reality applications can be enjoyed by profiting from the enhanced accuracy of the inertial head tracking device due to the automatic calibration.

Example of the herein disclosed method and system for calibration of head tracking devices are also useful in the context of head-tracking pointers that provide an inexpensive and easily-used mouse replacement for those unable to use traditional pointing devices.

It should also be noted that the mentioned systems and devices are particular useful in in-vehicle entertainment and communication systems. The invention also provides such systems comprising one or more of the above-mentioned systems/devices.

Additional features and advantages of the present invention will be described with reference to the drawings. In the description, reference is made to the accompanying figures that are meant to illustrate preferred embodiments of the invention. It is understood that such embodiments do not represent the full scope of the invention.
Figure 1 illustrates an example of a headphone - display device system incorporating an inertial head tracking device that is automatically calibrated.
Figure 2 illustrates steps of the calibration of an inertial head tracking device in accordance with the present invention.

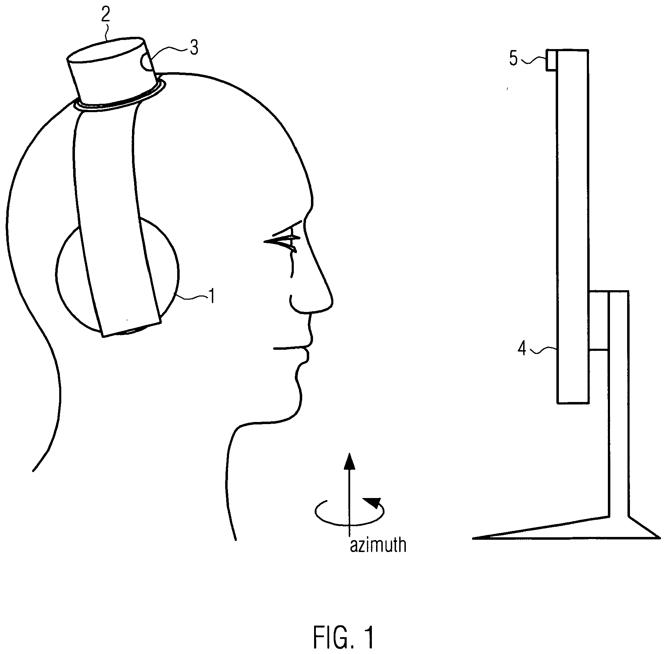

As shown in Figure 1 a headphone 1 according to an example of the herein disclosed invention comprises an inertial head tracking device 2. The inertial head tracking device 2 comprises a small container in which the technical components of the inertial head tracking device 2 are stored. These technical components comprise angular rate sensors in form of gyroscopes in order to track the rotational movements of the head, i.e. the roll, pitch and yaw.

The gyroscopes may be rate gyroscopes that use a spinning rotor mounted on a gimbal. The gimbal does not rotate freely. When the housing of the gimbal and rotor changes direction, the rotor is forced by the stiff gimbal to change orientation with it. To change the spin axis requires a torque proportional to the rate of change and this torque can be measured on the axis of the gimbal and used as a reading of angular velocity.

Another type of drift sensitive sensor that can be used in the inertial tracking device is a spin gyroscope that generates a position signal rather than a rate signal. A spin gyroscope consists of a spinning wheel mounted on a three axis gimbal designed to be as frictionless as possible. When the outer housing rotates, the gimbals swivel to allow the wheel to continue spinning on the same axis. Angular encoders measure the rotations of the gimbals, which correspond to the orientation of the housing with respect to the spin axis. As rotations about the spin axis are not measured, one spin gyroscope can measure at most two rotational degrees of freedom. The usual arrangement involves two spin gyroscopes, one for measuring pitch and roll (called a vertical gyroscope) and one for measuring yaw (called a directional gyroscope).

In principle, the gyroscopes may also be fiber-optic gyroscope that send a light signal in two directions around a spool of fiber-optic material and detect the phase difference when the light signal meets itself or magneto-optical gyroscopes.

The inertial head tracking device also comprises an emitter 3 that emits an infrared light. The infrared light beam is not directly emitted but deflected by a fan-like deflector (not shown) in a vertical angular range of some 45 degrees, for example. The deflector may be fixed and disperse a collimated beam in the above-mentioned angular range or may by some kind of mirror actuated by a step motor in order to have the emitted beam scanning the predetermined vertical angular range.

The headphone is carried by a user who sits before a display device 4, e.g., a computer monitor or a television screen. The display device 4 is provided with a sensor means 5 for detecting the infrared beam. Since this beam is dispersed in some vertical angular range or scans this angular range it is guaranteed that the sensor means 5 can detect the beam whenever the user looks straight to the display device 4 unless the pitch exceeds some predetermined limit in exceptional cases.

When the irradiated and deflected infrared beam is detected by the sensor means 5, i.e. when the user is exactly looking straight to the screen, a feedback signal is sent by the sensor means 5 and received by the head tracking device 2. In response to this feedback signal (in an alternative not covered by the claims, this may be a signal other than the irradiated beam reflected by the sensor means 5, such as a radio signal or some electrical signal if the headphone is electrically connected by wire with the display device 4 or with a control unit that is controlling the display device 4) the measured azimuth is reset to a predetermined value, e.g., to an azimuth of zero, whatever the actual measurement of the azimuth might be. Thereby, the inertial head tracking device 2 is automatically calibrated with respect to the azimuth. Any drift between actual and measured azimuthal values that might have been accumulated over some time is eliminated, once the user looks straight to the display device 4. Other rotational angles, i.e. the roll and the pitch, may be calibrated accordingly.

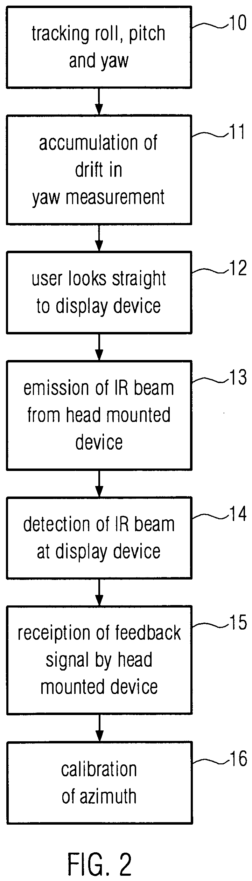

Steps of the herein disclosed method for the self-calibration of a head tracking system are shown is Figure 2. The roll, pitch and yaw of a head of a person carrying a head mounted device comprising an inertial head tracking device are tracked 10 during the movement of the person by means of angular rate sensors as, e.g., rate gyroscope employed by the inertial head tracking device. The person may be playing a video game that is designed to render some kind of a virtual reality. The person may alternatively be a back passenger in a vehicle who enjoys a movie presented by a vehicle entertainment system. The movie may be displayed on a screen installed in the back of a front seat of the vehicle and the passenger may carry a headphone as shown in Figure 1.

During the time the unavoidable drift between measured and actual values of the rotational angles, in particular, the yaw (the azimuth), accumulates 11. However, once the user looks straight to the display device (the computer monitor or the screen of the vehicle entertainment system) 12, an IR beam irradiated from the head mounted device 13, e.g., a headphone, or the head tracking device is detected by an IR sensor incorporated in the display device. The IR beam may be encoded in order to avoid a faulty calibration by sunlight, etc. Encoding might be performed by a rotating wheel or gear with holes by which the beam will be broken and received turning it on and off.

The sensor sends a feedback signal or it triggers transmission of such a feedback signal to be sent from the display device to the inertial head tracking device carried by the user. The feedback signal is detected by the head mounted device 15 or the inertial head tracking device and some control means calibrates the azimuth measurement of the angular rate sensors of the inertial head tracking device 16 in response to the feedback signal.

The previously discussed embodiments are not intended as limitations but serve as examples illustrating features and advantages of the invention. It is to be understood that some or all of the above described features can also be combined in different ways.

## Claims

1. Method for calibrating an inertial head tracking device (2) carried by a user and measuring at least one rotational angle of the moving head of the user, comprising emitting an electromagnetic beam from the inertial head tracking device (2); deflecting the emitted electromagnetic beam in one direction, in particular, vertically, within a predetermined angular range;
providing a mirror (5) at a fixed position spaced apart from the inertial head tracking device (2);
at least partly reflecting the electromagnetic beam from the mirror (5) to the inertial head tracking device (2) and receiving the at least partly reflected electromagnetic beam by the inertial head tracking device (2); and
resetting the at least one measured rotational angle to a predetermined value when the at least partly reflected electromagnetic beam is received by the inertial head tracking device (2) in response to the reception of the at least partly reflected electromagnetic beam.

2. The method according to claim 1, wherein the mirror (5) is attached in or at a display device (4).

3. The method according to one of the preceding claims, wherein the emitted electromagnetic beam is vertically deflected by a fan-shaped deflector or a moving mirror.

4. The method according to one of the preceding claims, wherein the at least one measured rotational angle is the azimuthal angle and the emitted electromagnetic beam is deflected vertically.

5. The method according to one of the preceding claims, further comprising encoding the electromagnetic beam.

6. The method according to one of the preceding claims, wherein the electromagnetic beam is an infrared or an ultraviolet beam.

7. Inertial head tracking device (2) calibration system, comprising an inertial head tracking device (2) configured to be carried by a user and to measure at least one rotational angle of the moving head of the user and comprising an emitter (3) configured to emit an electromagnetic beam and a deflector, in particular, a fan-shaped deflector, configured to deflect the emitted electromagnetic beam in one direction, in particular, vertically, within a predetermined angular range; a mirror (5) installed at a fixed position spaced apart from the inertial head tracking device (2) and configured to reflect at least partly the electromagnetic beam to the inertial head tracking device (2) as a feedback signal; and
wherein the inertial head tracking device (2) is configured to receive the feedback signal and to reset the at least one measured rotational angle to a predetermined value in response to the feedback signal.

8. The inertial head tracking device (2) calibration system according to claim 7, further comprising an encoder configured to encode the electromagnetic beam.

9. The inertial head tracking device (2) calibration system according to claim 7 or 8, wherein the at least one rotational angle is the azimuthal angle and the deflector is configured to deflect the emitted electromagnetic beam vertically.

10. The inertial head tracking device (2) calibration system according to one of the claims 7 to 9, wherein the emitter (3) is an infrared light emitter (3) or an ultraviolet light emitter (3).

11. Headphone (1), comprising
an inertial head tracking device (2) according to any one of claims 7-10.

12. Headphone tracking system, comprising
an inertial head tracking device (2) according to any one of claims 7-10.

13. Headphone display device (4) system, comprising
a headphone (1) according to claim 11.

## Patentansprüche

1. Verfahren zum Kalibrieren einer Trägheits-Kopftrackingvorrichtung (2), die von einem Benutzer getragen wird und zumindest einen Drehwinkel des sich bewegenden Kopfs des Benutzers misst, umfassend
Emittieren eines elektromagnetischen Strahls von der Trägheits-Kopftrackingvorrichtung (2);
Ablenken des emittierten elektromagnetischen Strahls in eine Richtung, insbesondere vertikal, innerhalb eines vorbestimmten Winkelbereichs;
Bereitstellen eines Spiegels (5) an einer festen Position beabstandet von der Trägheits-Kopftrackingvorrichtung (2); zumindest teilweises Reflektieren des elektromagnetischen Strahls von dem Spiegel (5) zu der Trägheits-Kopftrackingvorrichtung (2) und Empfangen des zumindest teilweise reflektierten elektromagnetischen Strahls durch die Trägheits-Kopftrackingvorrichtung (2); und Zurücksetzen des zumindest einen gemessenen Drehwinkels auf einen vorbestimmten Wert, wenn der zumindest teilweise reflektierte elektromagnetische Strahl durch die Trägheits-Kopftrackingvorrichtung (2) empfangen wird, als Reaktion auf den Empfang des zumindest teilweise reflektierten elektromagnetischen Strahls.

2. Verfahren nach Anspruch 1, wobei der Spiegel (5) in oder an einer Anzeigevorrichtung (4) befestigt ist.

3. Verfahren nach einem der vorstehenden Ansprüche, wobei der emittierte elektromagnetische Strahl durch einen fächerförmigen Deflektor oder einen sich bewegenden Spiegel vertikal abgelenkt wird.

4. Verfahren nach einem der vorstehenden Ansprüche, wobei der zumindest eine gemessene Drehwinkel der Azimutwinkel ist und der emittierte elektromagnetische Strahl vertikal abgelenkt wird.

5. Verfahren nach einem der vorstehenden Ansprüche, ferner umfassend Codieren des elektromagnetischen Strahls.

6. Verfahren nach einem der vorstehenden Ansprüche, wobei der elektromagnetische Strahl ein Infrarot- oder Ultraviolettstrahl ist.

7. Kalibrierungssystem einer Trägheits-Kopftrackingvorrichtung (2), umfassend
eine Trägheits-Kopftrackingvorrichtung (2), die dazu konfiguriert ist, von einem Benutzer getragen zu werden und zumindest einen Drehwinkel des sich bewegenden Kopfs des Benutzers zu messen, und umfassend einen Emitter (3), der dazu konfiguriert ist, einen elektromagnetischen Strahl zu emittieren, und einen Deflektor, insbesondere einen fächerförmigen Deflektor, der dazu konfiguriert ist, den emittierten elektromagnetischen Strahl in eine Richtung, insbesondere vertikal, innerhalb eines vorbestimmten Winkelbereichs abzulenken;
einen Spiegel (5), der an einer festen Position beabstandet von der Trägheits-Kopftrackingvorrichtung (2) installiert und dazu konfiguriert ist, den elektromagnetischen Strahl zumindest teilweise zu der Trägheits-Kopftrackingvorrichtung (2) als ein Rückkopplungssignal zu reflektieren, und
wobei die Trägheits-Kopftrackingvorrichtung (2) dazu konfiguriert ist, das Rückkopplungssignal zu empfangen und den zumindest einen gemessenen Drehwinkel als Reaktion auf das Rückkopplungssignal auf einen vorbestimmten Wert zurückzusetzen.

8. Kalibrierungssystem einer Trägheits-Kopftrackingvorrichtung (2) nach Anspruch 7, ferner umfassend einen Codierer, der dazu konfiguriert ist, den elektromagnetischen Strahl zu codieren.

9. Kalibrierungssystem einer Trägheits-Kopftrackingvorrichtung (2) nach Anspruch 7 oder 8, wobei der zumindest eine Drehwinkel der Azimutwinkel ist und der Deflektor dazu konfiguriert ist, den emittierten elektromagnetischen Strahl vertikal abzulenken.

10. Kalibrierungssystem einer Trägheits-Kopftrackingvorrichtung (2) nach einem der Ansprüche 7 bis 9, wobei der Emitter (3) ein Infrarotlichtemitter (3) oder ein Ultraviolettlichtemitter (3) ist.

11. Kopfhörer (1), umfassend
eine Trägheits-Kopftrackingvorrichtung (2) nach einem der Ansprüche 7-10.

12. Kopfhörer-Trackingsystem, umfassend
eine Trägheits-Kopftrackingvorrichtung (2) nach einem der Ansprüche 7-10.

13. System einer Kopfhörer-Anzeigevorrichtung (4), umfassend einen Kopfhörer (1) nach Anspruch 11.

## Revendications

1. Procédé d'étalonnage d'un dispositif de suivi de position de tête inertiel (2) porté par un utilisateur et de mesure d'au moins un angle de rotation de la tête en mouvement de l'utilisateur, comprenant l'émission d'un faisceau électromagnétique à partir du dispositif de suivi de position de tête inertiel (2) ;
la déflexion du faisceau électromagnétique émis dans une direction, en particulier, verticalement, dans une plage d'écart angulaire prédéterminée ;
la fourniture d'un miroir (5) dans une position fixe espacée par rapport au dispositif de suivi de position de tête inertiel (2) ;
la réflexion au moins partielle du faisceau électromagnétique du miroir (5) vers le dispositif de suivi de position de tête inertiel (2) et la réception du faisceau électromagnétique au moins partiellement réfléchi par le dispositif de suivi de position de tête inertiel (2) ; et
la réinitialisation de l'au moins un angle de rotation mesuré à une valeur prédéterminée lorsque le faisceau électromagnétique au moins partiellement réfléchi est reçu par le dispositif de suivi de position de tête inertiel (2) en réponse à la réception du faisceau électromagnétique au moins partiellement réfléchi.

2. Procédé selon la revendication 1, dans lequel le miroir (5) est attaché dans un dispositif d'affichage (4) ou au niveau de celui-ci.

3. Procédé selon l'une quelconque des revendications précédentes, dans lequel le faisceau électromagnétique émis est dévié verticalement par un déflecteur en forme d'éventail ou un miroir mobile.

4. Procédé selon l'une des revendications précédentes, dans lequel l'au moins un angle de rotation mesuré est l'angle d'azimut et le faisceau électromagnétique émis est dévié verticalement.

5. Procédé selon l'une des revendications précédentes, comprenant en outre le codage du faisceau électromagnétique.

6. Procédé selon l'une des revendications précédentes, dans lequel le faisceau électromagnétique est un faisceau infrarouge ou ultraviolet.

7. Système d'étalonnage de dispositif de suivi de position de tête inertiel (2), comprenant
un dispositif de suivi de position de tête inertiel (2) configuré pour être porté par un utilisateur et pour mesurer au moins un angle de rotation de la tête en mouvement de l'utilisateur et comprenant un émetteur (3) configuré pour émettre un faisceau électromagnétique et un déflecteur, en particulier, un déflecteur en forme d'éventail, configuré pour dévier le faisceau électromagnétique émis dans une direction, en particulier, verticalement, dans une plage d'écart angulaire prédéterminée ;
un miroir (5) installé dans une position fixe espacée par rapport au dispositif de suivi de position de tête inertiel (2) et configuré pour réfléchir au moins partiellement le faisceau électromagnétique sur le dispositif de suivi de position de tête inertiel (2) en tant que signal de rétroaction ; et
dans lequel le dispositif de suivi de position de tête inertiel (2) est configuré pour recevoir le signal de rétroaction et pour réinitialiser l'au moins un angle de rotation mesuré à une valeur prédéterminée en réponse au signal de rétroaction.

8. Système d'étalonnage de dispositif de suivi de position de tête inertiel (2) selon la revendication 7, comprenant en outre un codeur configuré pour coder le faisceau électromagnétique.

9. Système d'étalonnage de dispositif de suivi de position de tête inertiel (2) selon la revendication 7 ou 8, dans lequel l'au moins un angle de rotation est l'angle d'azimut et le déflecteur est configuré pour dévier verticalement le faisceau électromagnétique émis.

10. Système d'étalonnage de dispositif de suivi de position de tête inertiel (2) selon l'une des revendications 7 à 9, dans lequel l'émetteur (3) est une source de lumière infrarouge (3) ou une source de lumière ultraviolette (3).

11. Casque d'écoute (1), comprenant un dispositif de suivi de position de tête inertiel (2) selon l'une quelconque des revendications 7 à 10.

12. Système de suivi de position de casque d'écoute, comprenant un dispositif de suivi de position de tête inertiel (2) selon l'une quelconque des revendications 7 à 10.

13. Système de dispositif d'affichage de casque d'écoute (4), comprenant
un casque d'écoute (1) selon la revendication 11.
